# EUROPÄISCHE PATENTSCHRIFT

(11) **EP 4 399 790 B1**
(45) Veröffentlichungstag und Bekanntmachung des Hinweises auf die Patenterteilung: **26.08.2026**
(21) Anmeldenummer: 22769078.1
(22) Anmeldetag: 06.09.2022
(51) Int. Cl.: H02K 9/08, H02K 21/24

(54) **AXIALFLUSSMASCHINE**
AXIAL FLUX MACHINE
MACHINE À FLUX AXIAL

(30) Priorität: 06.09.2021 DE 102021122967
(43) Veröffentlichungstag der Anmeldung: 17.07.2024
(73) Patentinhaber: Schaeffler Technologies AG & Co. KG, 91074 Herzogenaurach (DE)
(72) Erfinder: AGNER, Ivo, 77815 Bühl (DE); RIESS, Stefan, 86916 Kaufering (DE)
(74) Vertreter: Schaeffler Technologies
(86) Internationale Anmeldenummer: PCT/DE2022/100657
(87) Internationale Veröffentlichungsnummer: WO 2023/030583

(56) Entgegenhaltungen:
- CN-U- 205 319 816
- DE-A1- 102014 213 452
- DE-A1- 3 142 913
- GB-A- 2 579 616
- JP-A- 2018 026 974
- US-A1- 2014 042 842
- US-A1- 2014 145 528

## Beschreibung

Die vorliegende Erfindung betrifft eine Axialflussmaschine, umfassend einen relativ zu einem Stator drehbar gelagerten Rotor, wobei der Stator mindestens einen ersten scheibenförmigen Statorkörper aufweist und der Rotor sowie der erste Statorkörper so angeordnet sind, dass axial zwischen dem ersten Statorkörper und dem Rotor ein von einem Kühlfluid durchströmbarer erster magnetisch wirksamer Spalt gebildet ist.

Bei Kraftfahrzeugen werden für den Antrieb verstärkt Elektromotoren eingesetzt, um Alternativen zu Verbrennungsmotoren zu schaffen, die fossile Brennstoffe benötigen. Um die Alltagstauglichkeit der Elektroantriebe zu verbessern und zudem den Benutzern den gewohnten Fahrkomfort bieten zu können, sind bereits erhebliche Anstrengungen unternommen worden.

Eine ausführliche Darstellung zu einem Elektroantrieb ergibt sich aus einem Artikel der Zeitschrift ATZ 113. Jahrgang, 05/2011, Seiten 360-365 von Erik Schneider, Frank Fickl, Bernd Cebulski und Jens Liebold mit dem Titel: Hochintegrativ und Flexibel Elektrische Antriebseinheit für E-Fahrzeuge. In diesem Artikel wird eine Antriebseinheit für eine Achse eines Fahrzeugs beschrieben, welche einen E-Motor umfasst, der konzentrisch und koaxial zu einem Kegelraddifferenzial angeordnet ist, wobei in dem Leistungsstrang zwischen Elektromotor und Kegelraddifferenzial ein schaltbarer 2-Gang-Planetenradsatz angeordnet ist, der ebenfalls koaxial zu dem E-Motor bzw. dem Kegel-raddifferenzial oder Stirnraddifferential positioniert ist. Die Antriebseinheit ist sehr kompakt aufgebaut und erlaubt aufgrund des schaltbaren 2-Gang-Planetenradsatzes einen guten Kompromiss zwischen Steigfähigkeit, Beschleunigung und Energieverbrauch. Derartige Antriebseinheiten werden auch als E-Achsen oder elektrisch betreibbarer Antriebsstrang bezeichnet.

Neben den rein elektrisch betriebenen Antriebssträngen sind auch hybride Antriebsstränge bekannt. Derartige Antriebsstränge eines Hybridfahrzeuges umfassen üblicherweise eine Kombination aus einer Brennkraftmaschine und einem Elektromotor, und ermöglichen - beispielsweise in Ballungsgebieten - eine rein elektrische Betriebsweise bei gleichzeitiger ausreichender Reichweite und Verfügbarkeit gerade bei Überlandfahrten. Zudem besteht die Möglichkeit, in bestimmten Betriebssituationen gleichzeitig durch die Brennkraftmaschine und den Elektromotor anzutreiben.

Eine Axialflussmaschine bezeichnet eine dynamoelektrische Maschine, bei der der magnetische Fluss zwischen Rotor und Stator parallel zur Drehachse des Rotors verläuft. Häufig sind sowohl Stator als auch Rotor weitgehend scheibenförmig ausgebildet. Axialflussmaschinen sind insbesondere dann vorteilhaft, wenn der axial zur Verfügung stehende Bauraum in einem gegebenen Anwendungsfall begrenzt ist. Dies ist beispielsweise vielfach beiden eingangs beschriebenen elektrischen Antriebsystemen für Elektro- oder Hybridfahrzeuge der Fall.

Neben der verkürzten axialen Baulänge liegt ein weiterer Vorteil der Axialflussmaschine in ihrer vergleichsweise hohen Drehmomentdichte. Ursächlich hierfür ist die im Vergleich zu Radialflussmaschinen größere Luftspaltfläche, die bei einem gegebenen Bauraum zur Verfügung steht. Ferner ist auch ein geringeres Eisenvolumen im Vergleich zu konventionellen Maschinen notwendig, was sich positiv auf den Wirkungsgrad der Maschine auswirkt.

In der Regel umfasst eine Axialflussmaschine mindestens einen Stator, der Wicklungen zur Erzeugung des axial ausgerichteten magnetischen Feldes aufweist. Mindestens ein Rotor ist beispielsweise mit Permanentmagneten bestückt, deren magnetisches Feld in Wechselwirkung mit dem magnetischen Feld der Statorwicklungen über einen Luftspalt ein Antriebsmoment erzeugt.

Bei der Entwicklung der für E-Achsen und Hybridmodule vorgesehenen elektrischen Maschinen besteht ein anhaltendes Bedürfnis daran, deren Leistungsdichten zu steigern, so dass der hierzu notwendigen Kühlung der Axialflussmaschinen wachsende Bedeutung zukommt. Aufgrund der notwenigen Kühlleistungen haben sich in den meisten Konzepten Hydraulikflüssigkeiten, wie Kühlöle, zum Abtransport von Wärme aus den thermisch beaufschlagten Bereichen einer elektrischen Maschine durchgesetzt. Dennoch sind diese Kühlstrategien oft unzureichend und/oder mit hohen Kosten in der technischen Realisierung verbunden.

Aus jeder der DE 10 2014 213452 A1, der US 2014/145528 A1, der US 2014/042842 A1, der DE 31 42 913 A1 und der CN 205 319 816 U ist eine Axialflussmaschine gemäß dem Oberbegriff des Anspruchs 1 bekannt.

Bezüglich weiteren Standes der Technik wird auf die GB 2 579 616 A und die JP 2018 026974 A verwiesen.

Es ist daher die Aufgabe der Erfindung die aus dem Stand der Technik bekannten Probleme zu beheben oder zumindest abzumildern und eine Axialflussmaschine mit einem effektiven und kostengünstigen Kühlsystem bereitzustellen.

Diese Aufgabe wird gelöst durch eine Axialflussmaschine, umfassend einen relativ zu einem Stator drehbar gelagerten Rotor, wobei der Stator mindestens einen ersten scheibenförmigen Statorkörper aufweist und der Rotor sowie der erste Statorkörper so angeordnet sind, dass axial zwischen dem ersten Statorkörper und dem Rotor ein von einem Kühlfluid durchströmbarer erster magnetisch wirksamer Spaltgebildet ist, wobei die Axialflussmaschine wenigstens einen ersten Kühlkreislaufaufweist, in dem das Kühlfluid im Betrieb der Axialflussmaschine an einem radial inneren Umfang in den ersten Spalteintritt, den ersten Spalt in radialer Richtung nach außen durchströmt und an einem radial äußeren Umfangaus dem ersten Spaltaustritt, wobei an dem äußeren Umfang des ersten Spalts wenigstens ein von dem Kühlfluid durchströmbarer erster Kühlkanal angeordnet ist, der das Kühlfluid zurück zu dem radial inneren Umfang des ersten Spalts lenkt.

Hierdurch wird der Vorteil erzielt, dass insbesondere eine Verbesserung der Kühlung des Rotors aufgrund der höheren Magnetverluste im Rotor bei hohen Betriebsdrehzahlen ermöglicht wird. Dies wiederum ermöglicht die Erhöhung der Dauerleistung bei hohen Drehzahlen als auch eine Verlängerung der ertragbaren Beanspruchungszeiten in höheren Leistungsbereichen.

Aufgrund der Differenzdrehzahl zwischen Rotor und Stator wird beispielsweise Luft mit dem Rotor mitgerissen und in Rotation versetzt. Dadurch entsteht ein Fliehkrafteffekt in der Luft, der am Rotor innen einen Unterdruck hervorruft. Dieser Effekt wird bei der Erfindung genutzt, um einen Kühlkreislauf, beispielsweise mit Luft, zu erzeugen. Die Axialflussmaschine wirkt hier wie eine "Luftpumpe", die das Kühlfluid durch den Spalt von radial innen nach außen fördert. Kann sie dort entweichen und mittels eines ersten Kühlkanals, beispielsweise am Stator und/oder Motorgehäuse in einer beruhigten Zone ohne Differenzgeschwindigkeit der Bauteile zum radial innen Umfang des ersten Spalts (Rotorinnendurchmesser) zurückgeführt werden, entsteht so ein kontrollierter Kühlkreislauf. Beispielsweise sind die umgebenen Gehäuseteile in der Regel kühler als der Rotor. Insofern streicht hier das Kühlfluid beispielsweise an den kühleren Gehäuseteilen vorbei und kann die vom Rotor eingetragene Wärme an die Gehäuseteile übertragen, die sie wiederum in die Umgebung abführen können.

Zunächst werden die einzelnen Elemente des beanspruchten Erfindungsgegenstandes in der Reihenfolge ihrer Nennung im Anspruchssatz erläutert und nachfolgend besonders bevorzugte Ausgestaltungen des Erfindungsgegenstandes beschrieben.

Der magnetische Fluss in einer erfindungsgemäßen elektrischen Axialflussmaschine (AFM) ist im magnetisch wirksamen Spalt zwischen Stator und Rotor axial zu einer Rotationsrichtung des Rotors der Axialflussmaschine gerichtet. Es gibt unterschiedliche Typen von Axialflussmaschinen. Ein bekannter Typ ist eine sogenannte I-Anordnung, bei der der Rotor axial neben einem Stator oder zwischen zwei Statoren angeordnet ist. Ein anderer bekannter Typ ist eine sogenannte H-Anordnung, bei der zwei Rotoren auf gegenüberliegenden axialen Seiten eines Stators angeordnet sind. Die erfindungsgemäße Axialflussmaschine kann als I- oder H-Typ konfiguriert sein. Grundsätzlich ist es auch möglich, dass eine Mehrzahl von Rotor-Stator-Konfigurationen als I-Typ und/oder H-Typ axial nebeneinander angeordnet sind. Auch wäre es in diesem Zusammenhang möglich, sowohl eine oder mehrere Rotor-Stator-Konfigurationen des I-Typs sowie eine oder mehrere Rotor-Stator-Konfigurationen des H-Typs in axialer Richtung nebeneinander anzuordnen. Insbesondere ist es auch zu bevorzugen, dass die Rotor-Stator-Konfiguration des H-Typs und/oder des I-Typs jeweils im Wesentlichen identisch ausgebildet sind, so dass diese modulartig zu einer Gesamtkonfiguration zusammengefügt werden können. Derartige Rotor-Stator-Konfigurationen können insbesondere koaxial zueinander angeordnet sein sowie mit einer gemeinsamen Rotorwelle oder mit mehrere Rotorwellen verbunden sein.

Es kann gemäß einer weiteren bevorzugten Weiterentwicklung der Erfindung insbesondere auch vorgesehen sein, dass der Stator wenigstens einen zweiten scheibenförmigen Statorkörper umfasst, welcher koaxial zum ersten Statorkörper und zu der Rotorwelle angeordnet unter axialer Zwischenanordnung eines der Rotorkörper vom ersten Statorkörper beabstandet ist, so dass eine I-Konfiguration einer Axialflussmaschine realisiert ist.

Ein Rotor kann ferner eine Rotorwelle aufweisen. Als Rotorwelle wird eine drehbar gelagerte Welle einer elektrischen Maschine bezeichnet, mit der der Rotor bzw. Rotorkörper drehfest gekoppelt ist.

In diesem Zusammenhang ist es besonders bevorzugt, dass der Rotor eine Rotorwelle mit zumindest einem ersten scheibenförmig ausgebildeten, auf der Rotorwelle drehfest angeordneten Rotorkörper aufweist, was eine kosteneffiziente Fertigung durch Aufteilung des Rotors in magnetisch wirksame Bauteile (Rotorkörper) und rein mechanische Bauteile (Rotorwelle). Insbesondere ist es hierdurch auch möglich die vorangestellten verschiedenen I- und/oder H-Konfigurationen besonders flexibel auszubilden.

Der Rotor einer elektrischen Axialflussmaschine kann bevorzugt zumindest in Teilen als geblechter Rotor ausgebildet sein. Ein geblechter Rotor ist in axialer Richtung geschichtet ausgebildet. Der Rotor einer Axialflussmaschine kann alternativ auch einen Rotorträger bzw. Rotorkörper aufweisen, der entsprechend mit Magnetblechen und/oder SMC-Material und mit als Permanentmagneten ausgebildeten Magnetelementen bestückt ausgebildet ist.

Ein Rotor kann einen Rotorkörper umfassen. Ein Rotortkörper weist in bevorzugter Weise ein Innenteil, über das der Rotor drehfest mit einer Welle verbindbar ist, und ein Außenteil auf, das den Rotor in radialer Richtung nach außen begrenzt. Der Rotorkörper kann zwischen Innenteil und Außenteil mit mehreren Rotorstreben ausgebildet sein, über das das Innenteil und das Außenteil miteinander verbunden sind und welches gemeinsam mit der radialen Außenfläche des Innenteils und der radialen Innenfläche des Außenteils einen Aufnahmeraum für die Aufnahme der Magnetelemente und der Flussleitelemente des Rotors bildet. Alternativ zu dem Aufnahmeraum können die Magnetelemente auf dem Rotorträger angeordnet bzw. aufgesetzt sein.

Ein Magnetelement kann als Permanentmagnet in Form eines Stabmagneten oder in Form kleinerer als Klötze ausgebildeter Magnetblöcke gebildet sein. Die Magnetelemente sind in der Regel in, an oder auf einem Rotorträger angeordnet. Das als Permanentmagnet ausgebildete Magnetelement eines Rotors einer Axialflussmaschine steht in Wechselwirkung mit einem rotierenden Magnetfeld, welches durch die in der Regel mit einem Drehstrom beaufschlagten Statorwicklungspulen erzeugt ist.

Der Stator einer elektrischen Axialflussmaschine weist bevorzugt einen Statorkörper mit mehreren in Umfangsrichtung angeordneten Statorwicklungen auf. Der Statorkörper kann in Umfangsrichtung gesehen einteilig oder segmentiert ausgebildet sein. Der Statorkörper kann aus einem Statorblechpaket mit mehreren laminierten Elektroblechen gebildet sein. Alternativ kann der Statorkörper auch aus einem verpresstem weichmagnetischem Material, wie dem sogenannten SMC-Material (Soft Magnetic Compound) gebildet sein.

Die Axialflussmaschine kann ein Motorgehäuse aufweisen. Das Motorgehäuse umhaust die Axialflussmaschine zumindest abschnittsweise, bevorzugt vollständig. Ein Motorgehäuse kann darüber hinaus auch die Steuer- und Leistungselektronik aufnehmen. Das Motorgehäuse kann darüber hinaus auch Bestandteil eines Kühlsystems für die elektrische Maschine und derart ausgebildet sein, dass Kühlfluid über das Motorgehäuse der Axialflussmaschine zugeführt werden und/oder die Wärme über die Gehäuseflächen nach außen abgeführt werden kann.

Ein Motorgehäuse kann insbesondere aus einem metallischen Material gebildet sein. Vorteilhafter Weise kann das Motorgehäuse aus einem metallischen Gussmaterial, wie zum Beispiel Grauguss oder Stahlguss geformt sein. Grundsätzlich ist es auch denkbar, das Motorgehäuse ganz oder teilweise aus einem Kunststoff auszubilden. Besonders bevorzugt weist das Motorgehäuse eine zylinderringförmige Grundform auf. Das Motorgehäuse kann einteilig oder mehrteilig ausgeführt sein.

Es kann ebenfalls vorteilhaft sein, dass ein oder mehrere Statorträger zumindest abschnittsweise einteilig mit dem Motorgehäuse ausgebildet sind, was die Montagefreundlichkeit der Axialflussmaschine weiter verbessern kann.

Gemäß einer vorteilhaften Ausgestaltung der Erfindung kann vorgesehen sein, dass ein erster scheibenförmiger Statorkörper und/oder ein zweiter scheibenförmiger Statorkörper als Leiterplatte, insbesondere als gedruckte Schaltung, welche auch als Printed-Circuit-Board PCB bezeichnet wird, ausgebildet sind/ist, wodurch der Statorkörper besonders kompakt und kostengünstig herstellbar ist. Die Wicklung des Statorkörpers ist dabei einstückig mit der Leiterplatte ausgebildet. Die Leiterplatte ist bevorzugt eine Multilayer-Platine mit mehreren Kupferlagen, über die sich die Statorwicklungen erstrecken. Eine weitere mögliche Ausführungsform ist die Ausführung des Statorkörpers als Sandwich mehrerer Multilayer-Platinen. Die Leiterplatte ist bevorzugt aus einem Verbund aus Epoxyharz und Glasfaser gebildet.

Die Axialflussmaschine ist insbesondere für die Verwendung innerhalb eines elektrisch betreibbaren Antriebsstrangs eines Kraftfahrzeugs vorgesehen. Insbesondere ist die Axialflussmaschine so dimensioniert, dass Fahrzeuggeschwindigkeiten größer als 50 km/h, vorzugsweise größer als 80 km/h und insbesondere größer als 100 km/h erreicht werden können. Besonders bevorzugt weist die Axialflussmaschine eine Leistung größer als 30 kW, vorzugsweise größer als 50 kW und insbesondere größer als 70 kW auf. Es ist des Weiteren bevorzugt, dass die Axialflussmaschine Drehzahlen größer als 5.000 U/min, besonders bevorzugt größer als 10.000 U/min, ganz besonders bevorzugt größer als 12.500 U/min bereitstellt.

Des Weiteren kann es gemäß einer ebenfalls vorteilhaften Ausgestaltung der Erfindung vorgesehen sein, dass die Axialflussmaschine wenigstens einen zweiten Kühlkreislaufaufweist, in dem das Kühlfluid im Betrieb der Axialflussmaschine an einen radial inneren Umfang in einen zweiten Spaltzwischen einem Statorkörper und dem Rotor oder in einen zweiten Spaltzwischen einem Motorgehäuse und dem Rotor eintritt, den zweiten Spalt in radialer Richtung nach außen durchströmt und an einem radial äußeren Umfang aus dem zweiten Spalt austritt, wobei an dem äußeren Umfang des zweiten Spalts der erste Kühlkanal und/oder wenigstens ein von dem Kühlfluid durchströmbarer zweiter Kühlkanal angeordnet ist, der das Kühlfluid zurück zu dem radial inneren Umfang des zweiten Spalts lenkt.

Insbesondere kann der zweite Spalt auch ein magnetisch wirksamer Spalt sein, der durch einen Rotor und einem zum Rotor benachbarten Stator definiert ist.

Gemäß einer weiteren besonders bevorzugten Ausführungsform der Erfindung kann es vorgesehen sein, dass der erste Statorkörper und/oder der zweite Statorkörper in einem Statorträger aufgenommen sind/ ist, wodurch sich die Montage der Statorträger in der Axialflussmaschine vereinfachen lässt.

Des Weiteren kann die Erfindung auch dahingehend weiterentwickelt sein, dass der Stator von dem Motorgehäuse zumindest abschnittsweise umfasst ist, wobei der erste Kühlkanal und/oder der zweite Kühlkanal zumindest abschnittsweise zwischen dem Motorgehäuse und dem Stator ausgebildet ist, und/oder wobei der erste Kühlkanal und/oder der zweite Kühlkanal zumindest abschnittsweise in dem Motorgehäuse ausgebildet ist, und/oder der erste Kühlkanal oder der zweite Kühlkanal zumindest abschnittsweise in oder an einem der Statorkörper, und/oder einem der Statorträger ausgebildet ist.

In einer ebenfalls bevorzugten Ausgestaltungsvariante der Erfindung kann auch vorgesehen sein, dass der erste Kühlkanal und/oder der zweite Kühlkanal im Bereich des äußeren Umfangs eines der Spalte einen in radialer Richtung zum Spalt hin offenen ersten Kühlkanalabschnitt aufweist.

Der erste Kühlkanalabschnitt kann sich insbesondere in radialer Richtung erstrecken. Ganz besonders bevorzugt erstreckt sich der erste Kühlkanalabschnitt in radialer Richtung durch den Statorträger hindurch. Grundsätzlich ist es jedoch auch denkbar, dass der erste Kühlkanalabschnitt zumindest abschnittsweise axial durch den Statorträger geführt ist und ganz besonders bevorzugt an einer axialen Stirnseite aus dem Statorträger austritt. Der erste Kühlkanalabschnitt kann hierzu beispielsweise eine L-förmige Axialschnittkontur aufweisen. Auch kann es vorteilhaft sein, die Erfindung dahingehend weiterzuentwickeln, dass der erste Kühlkanalabschnitt zumindest abschnittsweise einen dem ersten Spalt zugeordneten Kanalabschnitt und einen dem zweiten Spalt zugeordneten Kanalabschnitt aufweist, wodurch eine gezielte, spaltspezifische Führung des Kühlfluids durch den ersten Kühlkanalabschnitt ermöglicht wird.

Gemäß einer weiteren zu bevorzugenden Ausgestaltung des Erfindungsgegenstandes kann vorgesehen sein, dass der erste Kühlkanal und/oder der zweite Kühlkanal jeweils einen zweiten sich in axialer Richtung erstreckenden Kühlkanalabschnitt aufweisen/aufweist, der den ersten Kühlkanalabschnitt mit einem sich in radialer Richtung erstreckenden dritten Kühlkanalabschnitts verbindet. Auch kann in diesem Zusammenhang die Erfindung in vorteilhafter Weise dahingehend ausgeführt sein, dass der Statorträger und/oder eine Rotorwelle des Rotors wenigstens einen sich in axialer Richtung erstreckenden vierten Kühlkanalabschnitt aufweisen/aufweist, welcher den radial inneren Umfang einer der Spalte mit dem dritten Kühlkanalabschnitt verbindet.

Um für einen Druckausgleich zwischen dem ersten und dem zweiten Spalt am inneren Umfang des Rotors zu sorgen, kann die Rotorwelle bevorzugt einen sich in Axialrichtung durch die Rotorwelle erstreckenden fünften Kühlkanalabschnitt aufweisen, welcher die Spalte kommunizierend miteinander verbindet.

Erfindungsgemäß ist in dem ersten Kühlkanal wenigstens ein Mittel zur Steuerung der Durchflussmenge an Kühlfluid angeordnet. Die Steuerung der Durchflussmenge an Kühlfluid kann in höchst bevorzugter Weise drehzahlabhängig und/oder druckabhängig und/oder fliehkraftabhängig und/oder temperaturabhängig erfolgen.

Die Steuerung der Durchflussmenge an Kühlfluid ist so konfiguriert, dass im Feldschwächungsbereich der Axialflussmaschine eine Zirkulation von Kühlfluid durch den ersten Kühlkanal ermöglicht ist, während eine Zirkulation von Kühlfluid durch den ersten Kühlkanal außerhalb des Feldschwächungsbereichs der Axialflussmaschine zumindest reduziert, bevorzugt verhindert ist. Bei niedrigen Drehzahlen der Axialflussmaschine im Teillastbereich werden so die Reibungsverluste im magnetisch wirksamen Spalt aus Effizienzgründen klein gehalten und tendenziell eine Zirkulation von Kühlfluid verhindert. Bei größeren Drehzahlen wiederum spielen die Spaltverluste im magnetisch wirksamen Spalt aus Effizienzgründen eine untergeordnete Rolle, da hier der Effekt der Wärmeabfuhr und der Robustheit des Systems im Vordergrund steht.

Die Mittel zur Steuerung der Durchflussmenge an Kühlfluid können bevorzugt ausgewählt sein aus der Gruppe der druckabhängigen Schaltelemente, insbesondere aus der Gruppe der Ventile, ganz besonders bevorzugt Rückschlagventile, fliehkraftbasierten und/oder drehzahlabhängigen Schaltelementen, insbesondere Blattfedern, und/oder temperaturbasierten Schaltelementen, insbesondere Bimetallelemente.

Es hat sich als besonders vorteilhaft erwiesen, dass der erste Kühlkanalabschnitt Mittel zur Steuerung der Durchflussmenge an Kühlfluid durch den ersten Kühlkanalabschnitt aufweist. Auch kann es ergänzend oder alternativ bevorzugt sein, dass in dem Kühlfluidpfad zwischen dem radial inneren Umfang einer der Spalte und dem dritten Kühlkanalabschnitt ein Mittel zur Steuerung der Durchflussmenge an Kühlfluid angeordnet ist.

Das Kühlfluid ist vorteilhafter Weise gasförmig. Insbesondere bevorzugt ist das Kühlfluid ausgewählt aus einer Gruppe umfassend Luft, Stickstoff und stickstoffenthaltene Gasgemische, Edelgase und edelgasenthaltene Gasgemische.

Nachfolgend wird die Erfindung anhand von Figuren ohne Beschränkung des allgemeinen Erfindungsgedankens näher erläutert werden.

Es zeigt:
- Figur 1: eine der Verdeutlichung dienende nicht erfindungsgemäße Ausführungsform einer Axialflussmaschine in einer ersten Axialschnittansicht,
- Figur 2: die der Verdeutlichung dienende nicht erfindungsgemäße Ausführungsform der Axialflussmaschine in einer zweiten Axialschnittansicht,
- Figur 3: eine weitere der Verdeutlichung dienende nicht erfindungsgemäße Ausführungsform einer Axialflussmaschine in einer Axialschnittansicht,
- Figur 4: eine erste Ausführungsform einer Axialflussmaschine in einer Axialschnittansicht,
- Figur 5: eine zweite Ausführungsform einer Axialflussmaschine in einer Axialschnittansicht,
- Figur 6: eine der Verdeutlichung dienende nicht erfindungsgemäße Ausführungsform einer Axialflussmaschine in einer Axialschnittansicht,
- Figur 7: eine dritte Ausführungsform einer Axialflussmaschine in einer Axialschnittansicht,
- Figur 8: eine der Verdeutlichung dienende nicht erfindungsgemäße Ausführungsform einer Axialflussmaschine in einer Axialschnittansicht,
- Figur 9: eine der Verdeutlichung dienende nicht erfindungsgemäße Ausführungsform einer Axialflussmaschine in einer Axialschnittansicht,
- Figur 10: eine der Verdeutlichung dienende nicht erfindungsgemäße Ausführungsform einer Axialflussmaschine in einer Axialschnittansicht,
- Figur 11: eine der Verdeutlichung dienende nicht erfindungsgemäße Ausführungsform einer Axialflussmaschine in einer Axialschnittansicht,
- Figur 12: eine der Verdeutlichung dienende nicht erfindungsgemäße Ausführungsform einer Axialflussmaschine in einer Axialschnittansicht,
- Figur 13: eine der Verdeutlichung dienende nicht erfindungsgemäße Ausführungsform einer Axialflussmaschine in einer Axialschnittansicht.

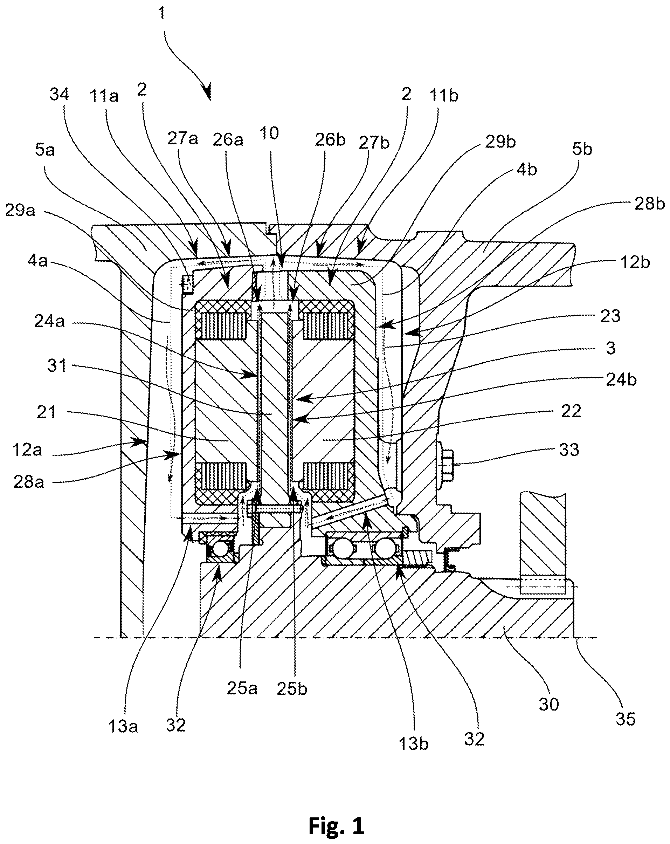

Die Figur 1 zeigt eine der Verdeutlichung dienende nicht erfindungsgemäße Ausführungsform einer Axialflussmaschine 1, umfassend einen relativ zu einem Stator 2 drehbar gelagerten Rotor 3, wobei der Stator 2 mindestens einen ersten scheibenförmigen Statorkörper 21 aufweist und der Rotor 3 sowie der erste Statorkörper 21 so angeordnet sind, dass axial zwischen dem ersten Statorkörper 21 und dem Rotor 3 ein von einem Kühlfluid 23 durchströmbarer erster magnetisch wirksamer Spalt 24a gebildet ist. Der um die Drehachse 35 rotierende Rotor 3 besitzt eine Rotorwelle 30 mit einem ersten scheibenförmig ausgebildeten, auf der Rotorwelle 30 drehfest angeordneten Rotorkörper 31, der den magnetisch wirksamen ersten Spalt 24a mit dem ersten Statorkörper 21 definiert.

Die Axialflussmaschine 1 weist einen ersten Kühlkreislauf 4a auf, in dem das Kühlfluid 23 im Betrieb der Axialflussmaschine 1 an einem radial inneren Umfang 25a in den ersten Spalt 24a eintritt, den ersten Spalt 24a in radialer Richtung nach außen durchströmt und an einem radial äußeren Umfang 26a aus dem ersten Spalt 24a austritt. Hierbei führt das durch den ersten Spalt 24a geführte Kühlfluid 23 Wärme aus dem Spalt 24a ab. An dem äußeren Umfang 26a des ersten Spalts 24a ist ein von dem Kühlfluid 23 durchströmbarer erster Kühlkanal 27a angeordnet, der das Kühlfluid 23 zurück zu dem radial inneren Umfang 25a des ersten Spalts 24a lenkt. Dabei kühlt das erwärmte Kühlfluid 23 an den stehenden Wänden des kälteren Motorgehäuses 5 und der Statorträger 29 ab, bevor es erneut in den ersten Spalt 24a eintritt.

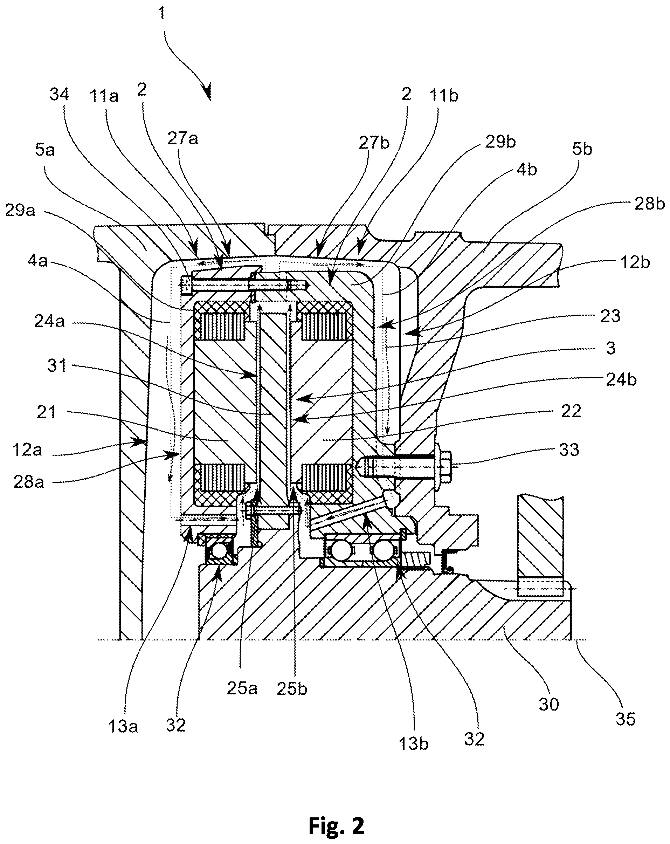

Der Stator 2 der gezeigten Ausführungsform weist einen zweiten scheibenförmigen Statorkörper 22 auf, welcher koaxial zum ersten Statorkörper 21 und zu der Rotorwelle 30 angeordnet unter axialer Zwischenanordnung des Rotorkörpers 31 vom ersten Statorkörper 21 beabstandet ist. Somit zeigt die Figur 1 eine Axialflussmaschine 1 in I-Konfiguration. Der erste Statorkörper 21 und der zweite Statorkörper 22 sind je in einem Statorträger 29a,29b aufgenommen, welche mittels der Schraube 34 gegeneinander fixiert sind und gemeinsam über die Schraube 33 an das Motorgehäuse 5b angebunden sind, was aus der Axialschnittansicht der Figur 2 hervorgeht. Die Statorträger 29a,29b sind gegenüber der drehenden Rotorwelle 30 über die Wälzlager 32 gelagert.

Die Axialflussmaschine 1 besitzt ferner einen zweiten Kühlkreislauf 4b, in dem das Kühlfluid 23 im Betrieb der Axialflussmaschine 1 an einem radial inneren Umfang 25b in einen zweiten Spalt 24b zwischen dem zweiten Statorkörper 2 und dem Rotor 3 eintritt, den zweiten Spalt 24b in radialer Richtung nach außen durchströmt und an einem radial äußeren Umfang 26b aus dem zweiten Spalt 24b austritt. An dem äußeren Umfang 26b des zweiten Spalts 24b ist ein von dem Kühlfluid 23 durchströmbarer zweiter Kühlkanal 27b angeordnet, der das Kühlfluid 23 zurück zu dem radial inneren Umfang 25b des zweiten Spalts 24b lenkt.

In der Figur 1 ist ferner gezeigt, dass der Stator 2 von dem Motorgehäuse 5a,5b vollständig umfasst ist, wobei der erste Kühlkanal 27a und der zweite Kühlkanal 27b jeweils zwischen dem Motorgehäuse 5a,5b und dem Stator 2 bzw. den Statorträgern 29a,29b ausgebildet ist.

Der erste Kühlkanal 27a und der zweite Kühlkanal 27b weisen im Bereich des äußeren Umfangs 26a,26b eines der Spalte 24a,24b einen in radialer Richtung zum Spalt 24a,24b hin offenen gemeinsamen ersten Kühlkanalabschnitt 10 auf.

Der erste Kühlkanal 27a und der zweite Kühlkanal 27b weisen jeweils einen zweiten sich in axialer Richtung erstreckenden Kühlkanalabschnitt 11a,11b auf, der den ersten Kühlkanalabschnitt 10 mit einem sich in radialer Richtung erstreckenden dritten Kühlkanalabschnitts 12a, 12b verbindet. Die Statorträger 29a,29b besitzen jeweils einen sich in axialer Richtung erstreckenden vierten Kühlkanalabschnitt 13a, 13b, welcher den radial inneren Umfang 25 der Spalte 24a,24b jeweils mit dem dritten Kühlkanalabschnitt 12a,12b verbindet.

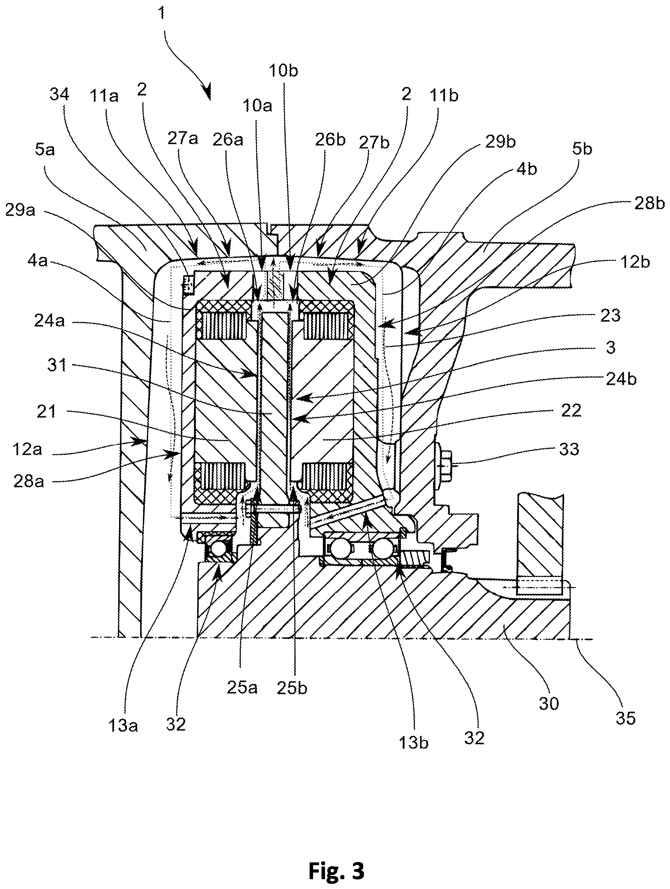

Wie in der der Verdeutlichung dienenden nicht erfindungsgemäßen Ausführungsform der Figur 3 gezeigt, kann der erste Kühlkanalabschnitt 10 zumindest abschnittsweise einen dem ersten Spalt 24a zugeordneten Kanalabschnitt 10a und einen dem zweiten Spalt 24b zugeordneten Kanalabschnitt 10b aufweisen, wodurch eine verbesserte getrennte Führung des Kühlfluids 23 aus den Spalten 24a,24b realisiert werden kann.

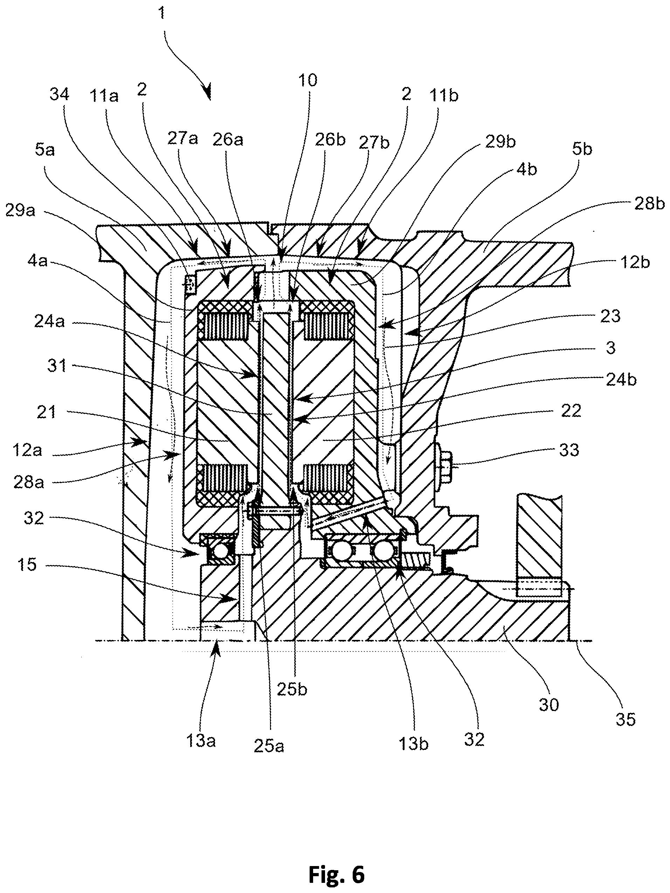

In der Figur 6 ist eine der Verdeutlichung dienende nicht erfindungsgemäße Ausführungsform der Axialflussmaschine 1 gezeigt, bei der die Rotorwelle 30 des Rotors 3 einen sich in axialer Richtung erstreckenden vierten Kühlkanalabschnitt 13a aufweist, welcher den radial inneren Umfang 25 des ersten Spalts 24a unter Zwischenschaltung eines radial verlaufenden sechsten Kühlkanalabschnitt 15 mit dem dritten Kühlkanalabschnitt 12a verbindet. Hierdurch kann die radiale Wegstrecke des Kühlfluids 23 in dem radial verlaufenden dritten Kühlkanalabschnitt 12a verlängert werden, was zu einer entsprechend verbesserten Kühlung beiträgt.

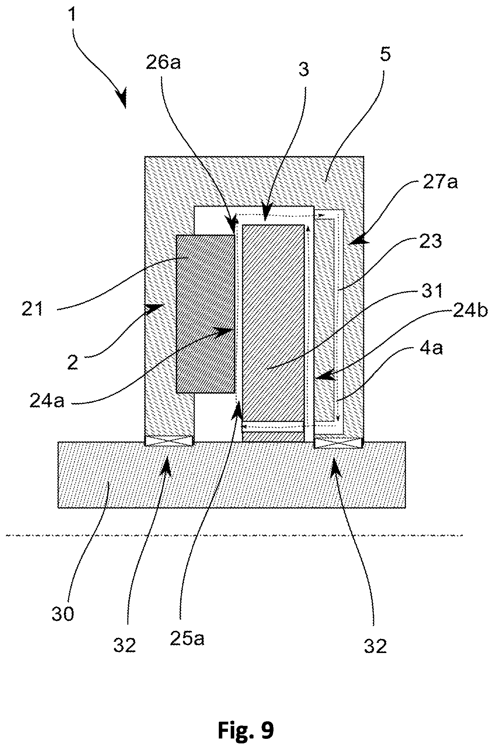

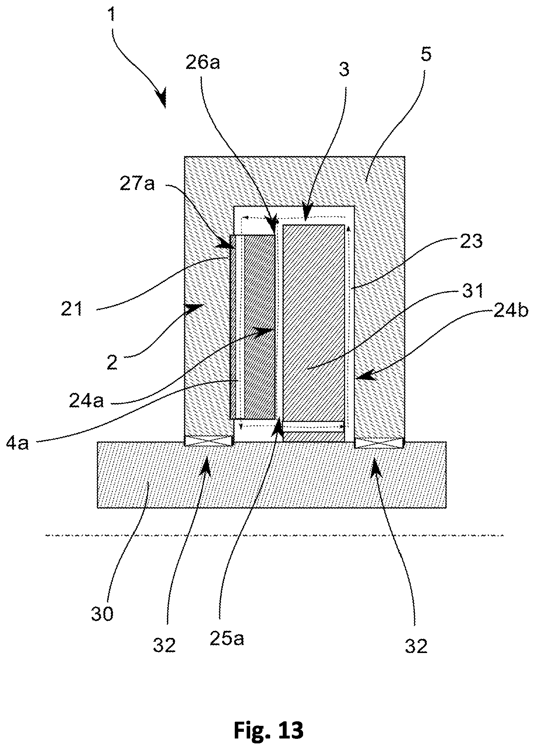

In der Figur 13 ist eine weitere der Verdeutlichung dienende nicht erfindungsgemäße Modifikation der aus den Figuren 9-10 bekannten Axialflussmaschinen 1 gezeigt, bei der der erste Kühlkanal 27a auch abschnittsweise in dem Statorkörper 21 verläuft. Natürlich wäre es auch möglich, den ersten Kühlkanal 27a zumindest abschnittsweise durch einen Statorträger 29a,29b, wie er aus den Figuren 1-8 bekannt ist, hindurchzuführen.

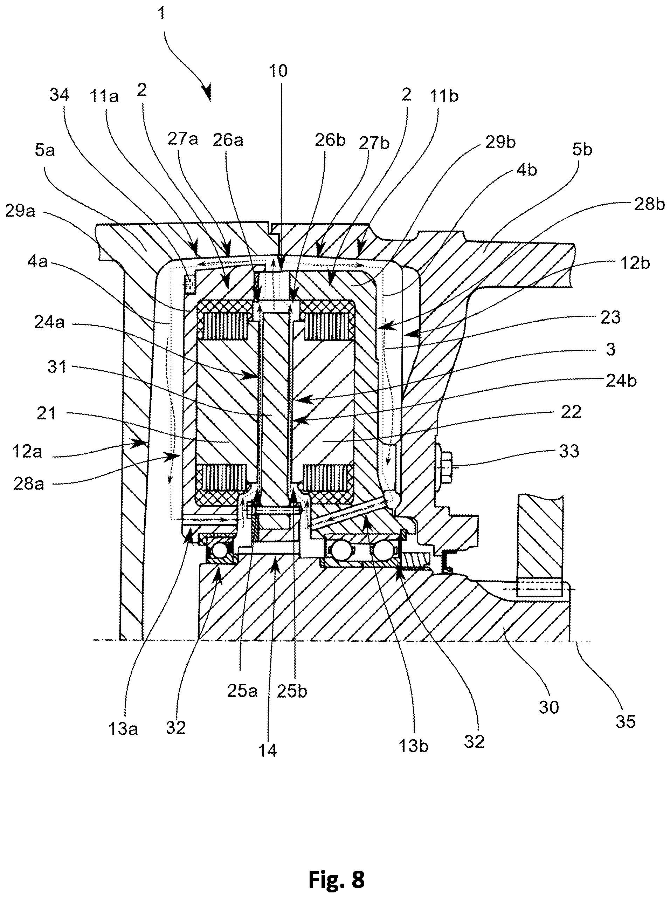

Wie es in der der Verdeutlichung dienenden nicht erfindungsgemäßen Ausführungsform der Figur 8 gezeigt ist, kann zum Druckausgleich zwischen den beiden axialen Seiten des Rotors 3 die Rotorwelle 30 einen sich in Axialrichtung durch die Rotorwelle 30 erstreckenden fünften Kühlkanalabschnitt 14 aufweisen, welcher die Spalte 24a,24b kommunizierend miteinander verbindet.

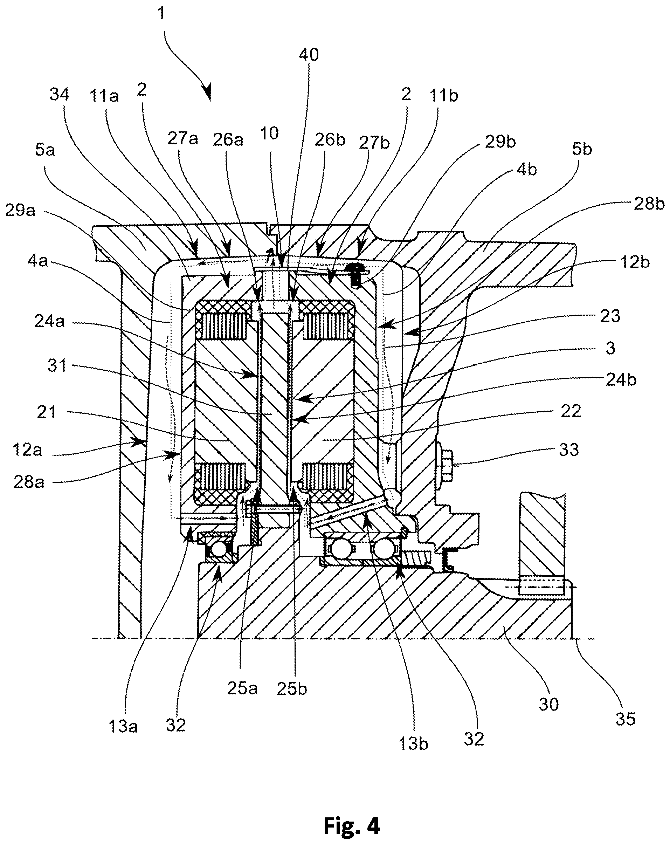

In den ersten bis dritten Ausführungsformen der Figuren 4,5 und 7 ist jeweils eine Ausführungsform einer Axialflussmaschine 1 gezeigt, bei der in dem ersten Kühlkanal 27a und/oder dem zweiten Kühlkanal 27b wenigsten ein Mittel zur Steuerung 40 der Durchflussmenge an Kühlfluid 23 angeordnet ist. Die Steuerung der Durchflussmenge an Kühlfluid 23 kann insbesondere drehzahlabhängig und/oder druckabhängig und/oder fliehkraftabhängig und/oder temperaturabhängig erfolgen. Die Steuerung der Durchflussmenge an Kühlfluid 23 kann insbesondere auch so konfiguriert sein, dass im Feldschwächungsbereich der Axialflussmaschine 1 eine Zirkulation von Kühlfluid 23 durch einen der Kühlkanäle 27a,27b ermöglicht ist, während eine Zirkulation von Kühlfluid 23 durch einen der Kühlkanäle 27a,27b außerhalb des Feldschwächungsbereichs der Axialflussmaschine 1 zumindest reduziert, bevorzugt verhindert ist.

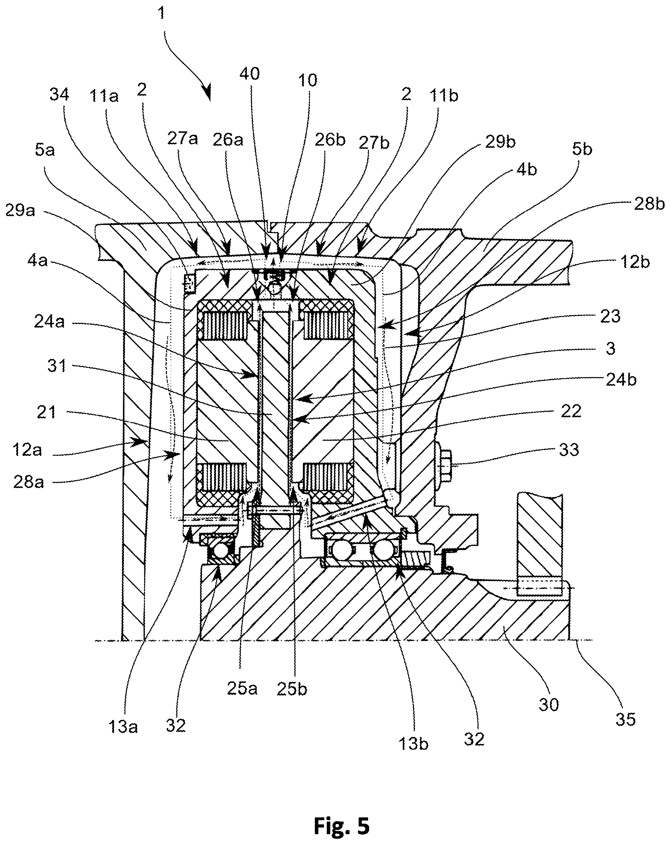

Die Figur 5 zeigt eine hierzu eine mögliche Ausführungsvariante, bei der in dem ersten Kühlkanalabschnitt 10 ein Mittel zur Steuerung 40 der Durchflussmenge an Kühlfluid 23 durch den ersten Kühlkanalabschnitt 10 angeordnet ist. Dieses ist als ein entgegen der Strömungsrichtung des Kühlfluid 23 federkraftbelastetes Kugelventil ausgebildet, welches bei einem vordefinierten Druck auf der Eingangsseite des ersten Kühlkanalabschnitts 10 selbstständig öffnet und den Strömungsquerschnitt des ersten Kühlkanalabschnitts 10 freigibt.

Alternativ zu dem aus der Figur 5 bekannten Kugelventil zeigt die Figur 4 ein Mittel zur Steuerung 40 der Durchflussmenge an Kühlfluid 23, dass als Membranfederventil konfiguriert ist. Es besteht im Wesentlichen aus einer am radial äußeren Mantel des Statorträgers 29 mittels einer Schraube befestigten Blattfeder, die dem ersten Kühlkanalabschnitt 10 unter einer Federvorspannung anliegend abdichtet

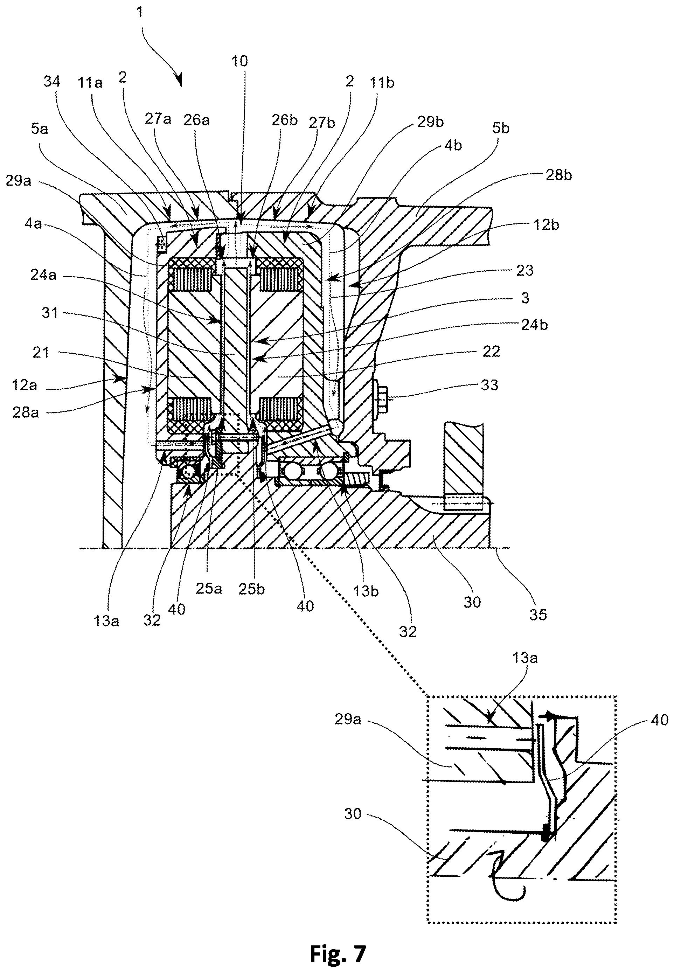

Eine weitere Alternative zeigt die Figur 7. Hier ist in dem Kühlfluidpfad zwischen dem radial inneren Umfang 25 des ersten Spalts 24a und dem vierten Kühlkanalabschnitt 13a ein Mittel zur Steuerung 40 der Durchflussmenge an Kühlfluid 23 angeordnet, welches als ein an der Rotorwelle 30 einseitig drehfest fixiertes Federelement ausgebildet ist, welches den Strömungsquerschnitt des vierten Kühlkanalabschnitts 13a bei niedrigen Drehzahlen abdeckt und bei höheren Drehzahlen aufgrund der auf das Federelement einwirkenden Fliehkraft den Strömungsquerschnitt des vierten Kühlkanalabschnitts 13a freigibt. Ein im Wesentlichen funktionsidentische Federelement liegt ebenfalls an dem vierten Kühlkanalabschnitt 13b des zweiten Kühlkanals 27b an.

Figur 9 zeigt eine Ausbildung der Axialflussmaschine 1, die lediglich aus einem ersten Stator 2 und einem ersten Rotor 3 mit einem Rotorkörper 31 besteht. Der erste Kühlkreislauf 4a ist dabei so ausgebildet, dass der erste Kühlkanal 27a in dem Motorgehäuse 5 ausgebildet ist. Ferner weist die gezeigte Axialflussmaschine 1 auch einen zweiten Spalt 24b zwischen dem Motorgehäuse und dem Rotor 3 auf, wobei dieser zweite Spalt 24b nicht magnetisch wirksam ist. Dennoch kann der erste Rotorkörper 31 durch das in dem zweiten Spalt 24b zirkulierende Kühlfluid 23 effektiv, da zweiseitig, gekühlt werden. Um den Kühlkreislauf 4a am radial inneren Umfang 25a zu schließen, weist der Rotorkörper 31 einen nicht näher bezeichneten, sich in axialer Richtung durch den Rotorkörper 31 erstreckenden Kanal auf.

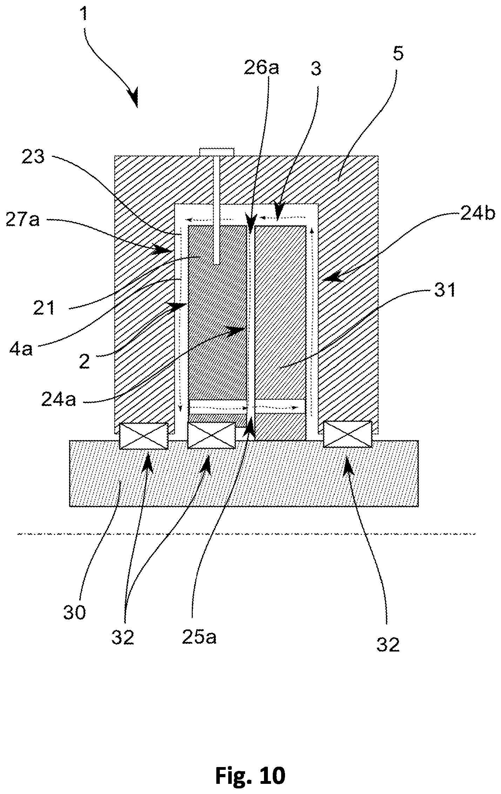

Figur 10 zeigt eine Axialflussmaschine 1, die ebenfalls lediglich aus einem Rotor 3 und einem über eine Schraubverbindung drehfest in dem Gehäuse 5 positionierten Stator 2 aufgebaut ist. Hierbei wird jedoch das Kühlfluid 23 über die Rückseite des Stators 2 zurück zu dem radial inneren Umfang 25a des ersten Spalts 24a zurückgeführt, so dass hier keine Kanäle oder Bohrungen in dem Motorgehäuse 5 erforderlich sind. Auch hier ist, wie schon in der Figur 9 gezeigt, der Rotor axial beidseitig von dem Kühlfluid 23 überströmt.

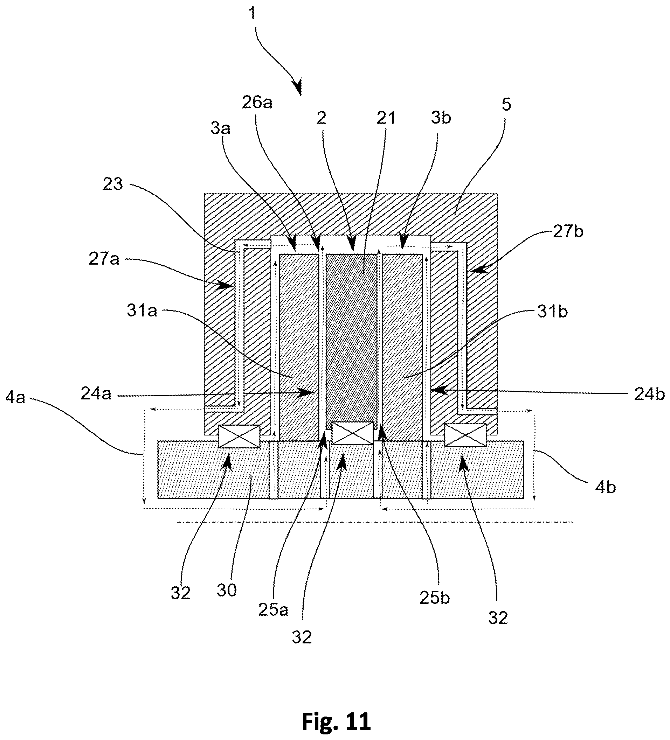

Eine Axialflussmaschine 1 in H-Konfiguration ist in der Figur 11 skizziert. Hierbei ist ein drehfest gegenüber dem Gehäuse 5 angeordneter Stator 2 mit einem Statorkörper 21 axial beidseits von je einem Rotorkörper 31a,31b angeordnet. Die Axialflussmaschine 1 besitzt einen ersten Kühlkreislauf 4a und einen zweiten Kühlkreislauf 4b. Der erste Kühlkanal 27a und der zweite Kühlkanal 27b verlaufen abschnittsweise in dem Motorgehäuse 5a,5b und die Kühlkreisläufe 4a,4b werden durch radial durch die Rotorwelle 30 verlaufende Bohrungen geschlossen.

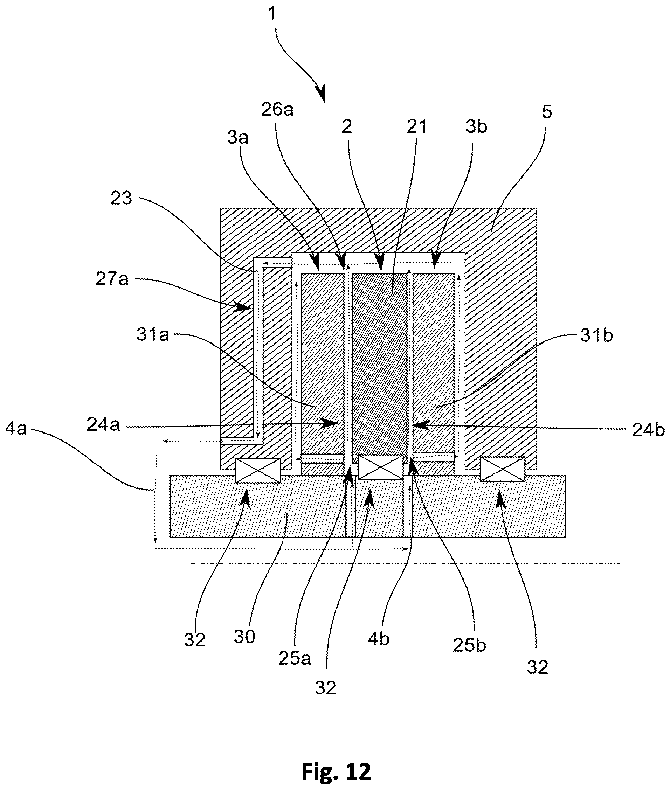

Die Figur 12 zeigt eine abgewandelte Form der aus Figur 11 bekannten Axialflussmaschine 1 mit lediglich einem Kühlkreislauf 4a, welcher jedoch durch den ersten Spalt 24a und den zweiten Spalt 24b geführt wird.

Es versteht sich, dass die Merkmale der verschiedenen Ausführungsformen auch frei miteinander kombinierbar sind. Die Erfindung ist nicht auf die in den Figuren dargestellten Ausführungsformen beschränkt. Die vorstehende Beschreibung ist daher nicht als beschränkend, sondern als erläuternd anzusehen. Die nachfolgenden Patentansprüche sind so zu verstehen, dass ein genanntes Merkmal in zumindest einer Ausführungsform der Erfindung vorhanden ist. Dies schließt die Anwesenheit weiterer Merkmale nicht aus. Sofern die Patentansprüche und die vorstehende Beschreibung 'erste' und 'zweite' Merkmal definieren, so dient diese Bezeichnung der Unterscheidung zweier gleichartiger Merkmale, ohne eine Rangfolge festzulegen.

### Bezugszeichenliste

1 Axialflussmaschine
2 Stator
3 Rotor
4 Kühlkreislauf
5 Motorgehäuse
10 Kühlkanalabschnitt
11 Kühlkanalabschnitt
12 Kühlkanalabschnitt
13 Kühlkanalabschnitt
14 Kühlkanalabschnitt
15 Kühlkanalabschnitt
21 Statorkörper
22 Statorkörper
23 Kühlfluid
24 Spalt
25 Umfang
26 Umfang
27 Kühlkanal
29 Statorträger
30 Rotorwelle
31 Rotorkörper
32 Wälzlager
33 Schraube
34 Schraube
35 Drehachse
40 Mittel zur Steuerung der Durchflussmenge an Kühlfluid

## Patentansprüche

1. Axialflussmaschine (1), umfassend einen relativ zu einem Stator (2) drehbar gelagerten Rotor (3), wobei
der Stator (2) mindestens einen ersten scheibenförmigen Statorkörper (21) aufweist und der Rotor (3a, 3b) sowie der erste Statorkörper (21) so angeordnet sind, dass axial zwischen dem ersten Statorkörper (21) und dem Rotor (3) ein von einem Kühlfluid (23) durchströmbarer erster magnetisch wirksamer Spalt (24a) gebildet ist,
die Axialflussmaschine (1) wenigstens einen ersten Kühlkreislauf (4a) aufweist, in dem das Kühlfluid (23) im Betrieb der Axialflussmaschine (1) an einem radial inneren Umfang (25a) in den ersten Spalt (24a) eintritt, den ersten Spalt (24a) in radialer Richtung nach außen durchströmt und an einem radial äußeren Umfang (26a) aus dem ersten Spalt (24a) austritt, und
an dem äußeren Umfang (26a) des ersten Spalts (24a) wenigstens ein von dem Kühlfluid (23) durchströmbarer erster Kühlkanal (27a) angeordnet ist, der das Kühlfluid (23) zurück zu dem radial inneren Umfang (25a) des ersten Spalts (24a) lenkt,
**dadurch gekennzeichnet, dass**
in dem ersten Kühlkanal (27a) wenigstens ein Mittel zur Steuerung (40) der Durchflussmenge an Kühlfluid (23) angeordnet ist, und
die Steuerung der Durchflussmenge an Kühlfluid (23) so konfiguriert ist, dass in einem Feldschwächungsbereich der Axialflussmaschine (1) eine Zirkulation von Kühlfluid (23) durch den ersten Kühlkanal (27a) ermöglicht ist, während außerhalb des Feldschwächungsbereichs der Axialflussmaschine (1) eine Zirkulation von Kühlfluid (23) durch den ersten Kühlkanal (27a) zumindest reduziert, bevorzugt verhindert ist.

2. Axialflussmaschine (1) nach Anspruch 1, **dadurch gekennzeichnet, dass** der Rotor (3) eine Rotorwelle (30) mit einem ersten scheibenförmig ausgebildeten, auf der Rotorwelle (30) drehfest angeordneten Rotorkörper (31, 31a, 31b) aufweist.

3. Axialflussmaschine (1) nach Anspruch 1 oder 2, **dadurch gekennzeichnet, dass** der Stator (2) wenigstens einen zweiten scheibenförmigen Statorkörper (22) umfasst, welcher koaxial zu dem ersten Statorkörper (21) und zu der Rotorwelle (30) angeordnet und unter axialer Zwischenanordnung des Rotorkörpers (31, 31a, 31b) von dem ersten Statorkörper (21) beabstandet ist.

4. Axialflussmaschine (1) nach Anspruch 3, **dadurch gekennzeichnet, dass** der erste Statorkörper (21) und/oder der zweite Statorkörper (22) in einem Statorträger (29a, 29b) aufgenommen ist.

5. Axialflussmaschine (1) nach Anspruch 4, **dadurch gekennzeichnet, dass**
die Axialflussmaschine (1) wenigstens einen zweiten Kühlkreislauf (4b) aufweist, in dem das Kühlfluid (23) im Betrieb der Axialflussmaschine (1) an einen radial inneren Umfang (25b) in einen zweiten Spalt (24b) zwischen einem Statorkörper (21, 22) und dem Rotor (3) oder in einen zweiten Spalt (24b) zwischen einem Motorgehäuse (5a,5b) und dem Rotor (3) eintritt, den zweiten Spalt (24b) in radialer Richtung nach außen durchströmt und an einem radial äußeren Umfang (26b) aus dem zweiten Spalt (24b) austritt, und
an dem äußeren Umfang (26b) des zweiten Spalts (24b) der erste Kühlkanal (27a) und/oder wenigstens ein von dem Kühlfluid (23) durchströmbarer zweiter Kühlkanal (27b) angeordnet ist, der das Kühlfluid (23) zurück zu dem radial inneren Umfang (25b) des zweiten Spalts (24b) lenkt.

6. Axialflussmaschine (1) nach Anspruch 5, **dadurch gekennzeichnet, dass**
der Stator (2) von dem Motorgehäuse (5a, 5b) zumindest abschnittsweise umfasst ist,
der erste Kühlkanal (27a) und/oder der zweite Kühlkanal (27b) zumindest abschnittsweise zwischen dem Motorgehäuse (5a, 5b) und dem Stator (2) ausgebildet ist, und/oder der erste Kühlkanal (27a) und/oder der zweite Kühlkanal (27b) zumindest abschnittsweise in dem Motorgehäuse (5a, 5b) ausgebildet ist, und/oder der erste Kühlkanal (27a) oder der zweite Kühlkanal (27b) zumindest abschnittsweise in oder an einem des ersten Statorkörpers (21) und des zweiten Statorkörpers (22) und/oder einem des ersten Statorträgers (29a) und des zweiten Statorträgers (29b) ausgebildet ist.

7. Axialflussmaschine (1) nach Anspruch 5 oder 6, **dadurch gekennzeichnet, dass** der erste Kühlkanal (27a) und/oder der zweite Kühlkanal (27b) im Bereich des äußeren Umfangs (26a,26b) eines der Spalte (24a, 24b) einen in radialer Richtung zu dem Spalt (24a, 24b) hin offenen ersten Kühlkanalabschnitt (10) aufweist.

8. Axialflussmaschine (1) nach Anspruch 7, **dadurch gekennzeichnet, dass** der erste Kühlkanalabschnitt (10) zumindest abschnittsweise einen dem ersten Spalt (24a) zugeordneten Kanalabschnitt (10a) und einen dem zweiten Spalt (24b) zugeordneten Kanalabschnitt (10b) aufweist.

9. Axialflussmaschine (1) nach Anspruch 7 oder 8, **dadurch gekennzeichnet, dass** der erste Kühlkanal (27a) und/oder der zweite Kühlkanal (27b) jeweils einen zweiten sich in axialer Richtung erstreckenden Kühlkanalabschnitt (11a, 11b) aufweist, der den ersten Kühlkanalabschnitt (10) mit einem sich in radialer Richtung erstreckenden dritten Kühlkanalabschnitt (12a, 12b) verbindet.

10. Axialflussmaschine (1) nach Anspruch 9, **dadurch gekennzeichnet, dass** der Statorträger (29a, 29b) und/oder eine Rotorwelle (30) des Rotors (3) wenigstens einen sich in axialer Richtung erstreckenden vierten Kühlkanalabschnitt (13a, 13b) aufweist, welcher den radial inneren Umfang (25) von einem der Spalte (24a, 24b) mit dem dritten Kühlkanalabschnitt (12a, 12b) verbindet.

11. Axialflussmaschine (1) nach einem der Ansprüche 5 bis 10, **dadurch gekennzeichnet, dass** die Rotorwelle (30) einen sich in Axialrichtung durch die Rotorwelle (30) erstreckenden fünften Kühlkanalabschnitt (14) aufweist, welcher die Spalte (24a, 24b) kommunizierend miteinander verbindet.

12. Axialflussmaschine (1) nach einem der Ansprüche 1 bis 11, **dadurch gekennzeichnet, dass** die Steuerung der Durchflussmenge an Kühlfluid (23) drehzahlabhängig und/oder druckabhängig und/oder fliehkraftabhängig und/oder temperaturabhängig erfolgt.

## Claims

1. An axial flux machine (1), comprising a rotor (3) rotatably mounted relative to a stator (2), wherein
the stator (2) has at least one first disc-shaped stator body (21) and the rotor (3a, 3b) as well as the first stator body (21) are arranged such that a first magnetically effective gap (24a) through which a cooling fluid (23) can flow is formed axially between the first stator body (21) and the rotor (3),
the axial flux machine (1) has at least one first cooling circuit (4a) in which, during operation of the axial flux machine (1), the cooling fluid (23) enters the first gap (24a) at a radially inner circumference (25a), flows through the first gap (24a) in the radially outward direction and emerges from the first gap (24a) at a radially outer circumference (26a), and
at least one first cooling channel (27a), through which the cooling fluid (23) can flow, is arranged on the outer circumference (26a) of the first gap (24a), and directs the cooling fluid (23) back toward the radially inner circumference (25a) of the first gap (24a),
**characterized in that**
at least one means (40) for controlling the flow rate of the cooling fluid (23) is arranged in the first cooling channel (27a), and
the control of the flow rate of the cooling fluid (23) is configured such that, within a field-weakening region of the axial flux machine (1), circulation of the cooling fluid (23) through the first cooling channel (27a) is enabled, whereas outside the field-weakening region of the axial flux machine (1), circulation of the cooling fluid (23) through the first cooling channel (27a) is at least reduced, preferably prevented.

2. The axial flux machine (1) according to claim 1, **characterized in that** the rotor (3) has a rotor shaft (30) with a first disc-shaped rotor body (31, 31a, 31b) that is arranged in a non-rotatable manner on the rotor shaft (30).

3. The axial flux machine (1) according to claim 1 or 2, **characterized in that** the stator (2) comprises at least one second disc-shaped stator body (22), which is arranged coaxially to the first stator body (21) and to the rotor shaft (30) and is spaced from the first stator body (21) with axial interposition of the rotor body (31, 31a, 31b).

4. The axial flux machine (1) according to claim 3, **characterized in that** the first stator body (21) and/or the second stator body (22) is received in a stator carrier (29a, 29b).

5. The axial flux machine (1) according to claim 4, **characterized in that**
the axial flux machine (1) has at least one second cooling circuit (4b) in which, during operation of the axial flux machine (1), the cooling fluid (23) enters into a second gap (24b) at a radially inner circumference (25b) between a stator body (21, 22) and the rotor (3) or into a second gap (24b) between a motor housing (5a, 5b) and the rotor (3), flows through the second gap (24b) in a radially outward direction and emerges from the second gap (24b) at a radially outer circumference (26b), and
the first cooling channel (27a) and/or at least one second cooling channel (27b) through which the cooling fluid (23) can flow is arranged on the outer circumference (26b) of the second gap (24b) and directs the cooling fluid (23) back toward the radially inner circumference (25b) of the second gap (24b).

6. The axial flux machine (1) according to claim 5, **characterized in that**
the stator (2) is surrounded by the motor housing (5a, 5b) at least in sections,
the first cooling channel (27a) and/or the second cooling channel (27b) is formed at least in sections between the motor housing (5a, 5b) and the stator (2), and/or the first cooling channel (27a) and/or the second cooling channel (27b) is formed at least in sections in the motor housing (5a, 5b), and/or the first cooling channel (27a) or the second cooling channel (27b) is formed at least in sections in or on one of the first stator body (21) and the second stator body (22) and/or one of the first stator carrier (29a) and the second stator carrier (29b).

7. The axial flux machine (1) according to claim 5 or 6, **characterized in that** the first cooling channel (27a) and/or the second cooling channel (27b) has, in the region of the outer circumference (26a, 26b) of one of the gaps (24a, 24b), a first cooling channel section (10) which is open in the radial direction toward the gap (24a, 24b).

8. The axial flux machine (1) according to claim 7, **characterized in that** the first cooling channel section (10) has a channel section (10a) assigned to the first gap (24a) and a channel section (10b) assigned to the second gap (24b) at least in sections.

9. The axial flux machine (1) according to claim 7 or 8, **characterized in that** the first cooling channel (27a) and/or the second cooling channel (27b) each has a second cooling channel section (11a, 11b) extending in the axial direction, which connects the first cooling channel section (10) to a third cooling channel section (12a, 12b) extending in the radial direction.

10. The axial flux machine (1) according to claim 9, **characterized in that** the stator carrier (29a, 29b) and/or a rotor shaft (30) of the rotor (3) has at least one fourth cooling channel section (13a, 13b) extending in the axial direction, which connects the radially inner circumference (25) of one of the gaps (24a, 24b) to the third cooling channel section (12a, 12b).

11. The axial flux machine (1) according to any one of claims 5 to 10, **characterized in that** the rotor shaft (30) has a fifth cooling channel section (14) which extends in the axial direction through the rotor shaft (30) and which connects the gaps (24a, 24b) to one another in a communicating manner.

12. The axial flux machine (1) according to any one of claims 1 to 11, **characterized in that** the control of the flow rate of the cooling fluid (23) is speed-dependent and/or pressure-dependent and/or centrifugal force-dependent and/or temperature-dependent.

## Revendications

1. Machine à flux axial (1), comprenant un rotor (3) monté de manière rotative par rapport à un stator (2), dans laquelle
le stator (2) présente au moins un premier corps de stator (21) en forme de disque et le rotor (3a, 3b) et le premier corps de stator (21) sont agencés de telle sorte que, axialement entre le premier corps de stator (21) et le rotor (3), un premier entrefer (24a) magnétiquement efficace à travers lequel un fluide de refroidissement (23) peut s'écouler est formé,
la machine à flux axial (1) présente au moins un premier circuit de refroidissement (4a), dans lequel le fluide de refroidissement (23), pendant le fonctionnement de la machine à flux axial (1), pénètre dans le premier entrefer (24a) au niveau d'une circonférence radiale interne (25a), s'écoule à travers le premier entrefer (24a) dans une direction radiale vers l'extérieur et sort du premier entrefer (24a) au niveau d'une circonférence radiale externe (26a), et
au niveau de la circonférence externe (26a) du premier entrefer (24a), au moins un premier canal de refroidissement (27a) à travers lequel peut s'écouler le fluide de refroidissement (23) est agencé, qui dirige le fluide de refroidissement (23) en retour vers la circonférence radiale interne (25a) du premier entrefer (24a),
**caractérisée en ce que**
dans le premier canal de refroidissement (27a), au moins un moyen de commande (40) du débit du fluide de refroidissement (23) est agencé, et
la commande du débit du fluide de refroidissement (23) est configurée de telle sorte que dans une zone d'affaiblissement de champ de la machine à flux axial (1), une circulation du fluide de refroidissement (23) à travers le premier canal de refroidissement (27a) est permise, tandis qu'en dehors de la zone d'affaiblissement de champ de la machine à flux axial (1), une circulation du fluide de refroidissement (23) à travers le premier canal de refroidissement (27a) est au moins réduite, de préférence empêchée.

2. Machine à flux axial (1) selon la revendication 1, **caractérisée en ce que** le rotor (3) présente un arbre de rotor (30) comportant un premier corps de rotor (31, 31a, 31b) réalisé en forme de disque agencé de manière non rotative sur l'arbre de rotor (30).

3. Machine à flux axial (1) selon la revendication 1 ou 2, **caractérisée en ce que** le stator (2) comprend au moins un second corps de stator (22) en forme de disque, qui est agencé coaxialement au premier corps de stator (21) et à l'arbre de rotor (30) et qui est espacé du premier corps de stator (21) par un agencement intermédiaire axial du corps du rotor (31, 31a, 31b).

4. Machine à flux axial (1) selon la revendication 3, **caractérisée en ce que** le premier corps de stator (21) et/ou le second corps de stator (22) est reçu dans un porte-stator (29a, 29b).

5. Machine à flux axial (1) selon la revendication 4, **caractérisée en ce que**
la machine à flux axial (1) présente au moins un second circuit de refroidissement (4b), dans lequel le fluide de refroidissement (23), pendant le fonctionnement de la machine à flux axial (1), au niveau d'une circonférence radiale interne (25b), pénètre dans un second entrefer (24b) entre un corps de stator (21, 22) et le rotor (3) ou dans un second entrefer (24b) entre un carter moteur (5a, 5b) et le rotor (3), s'écoule dans la direction radiale vers l'extérieur à travers le second entrefer (24b) et sort du second entrefer (24b) au niveau d'une circonférence radiale externe (26b), et
au niveau de la circonférence externe (26b) du second entrefer (24b) le premier canal de refroidissement (27a) et/ou au moins un second canal de refroidissement (27b), à travers lequel le fluide de refroidissement (23) peut s'écouler, est agencé, qui dirige le fluide de refroidissement (23) en retour vers la circonférence radiale interne (25b) du second entrefer (24b).

6. Machine à flux axial (1) selon la revendication 5, **caractérisée en ce que**
le stator (2) est au moins par sections enfermé par le carter moteur (5a, 5b),
le premier canal de refroidissement (27a) et/ou le second canal de refroidissement (27b) est réalisé au moins par sections entre le carter moteur (5a, 5b) et le stator (2), et/ou le premier canal de refroidissement (27a) et/ou le second canal de refroidissement (27b) est réalisé au moins par sections dans le carter moteur (5a, 5b), et/ou le premier canal de refroidissement (27a) ou le second canal de refroidissement (27b) est réalisé au moins par sections dans ou au niveau de l'un parmi le premier corps de stator (21) et le second corps de stator (22) et/ou l'un parmi le premier porte-stator (29a) et le second porte-stator (29b).

7. Machine à flux axial (1) selon la revendication 5 ou 6, **caractérisée en ce que** le premier canal de refroidissement (27a) et/ou le second canal de refroidissement (27b) présente une première section de canal de refroidissement (10) ouverte dans une direction radiale vers l'entrefer (24a, 24b) dans la région de la circonférence externe (26a, 26b) de l'un des entrefers (24a, 24b).

8. Machine à flux axial (1) selon la revendication 7, **caractérisée en ce que** la première section de canal de refroidissement (10) présente au moins une section de canal (10a) associée au premier entrefer (24a) et une section de canal (10b) associée au second entrefer (24b).

9. Machine à flux axial (1) selon la revendication 7 ou 8, **caractérisée en ce que** le premier canal de refroidissement (27a) et/ou le second canal de refroidissement (27b) présente respectivement une deuxième section de canal de refroidissement (11a, 11b) s'étendant dans la direction axiale, qui relie la première section de canal de refroidissement (10) à une troisième section de canal de refroidissement (12a, 12b) s'étendant dans la direction radiale.

10. Machine à flux axial (1) selon la revendication 9, **caractérisée en ce que** le porte-stator (29a, 29b) et/ou un arbre de rotor (30) du rotor (3) présente au moins une quatrième section de canal de refroidissement (13a, 13b) s'étendant dans la direction axiale qui relie la circonférence radiale interne (25) de l'un des entrefers (24a, 24b) à la troisième section de canal de refroidissement (12a, 12b).

11. Machine à flux axial (1) selon l'une des revendications 5 à 10, **caractérisée en ce que** l'arbre de rotor (30) présente une cinquième section de canal de refroidissement (14) s'étendant dans la direction axiale à travers l'arbre de rotor (30), qui relie en communication les entrefers (24a, 24b).

12. Machine à flux axial (1) selon l'une des revendications 1 à 11, **caractérisée en ce que** la commande du débit du fluide de refroidissement (23) est effectuée en fonction de la vitesse et/ou de la pression et/ou de la force centrifuge et/ou de la température.
